Europäisches Patentamt

European Patent Office

Office européen des brevets

(11) Veröffentlichungsnummer: **0 517 078 A2**

## (12) EUROPÄISCHE PATENTANMELDUNG

(21) Anmeldenummer: **92108890.2**

(51) Int. Cl.5: **G06K 11/16**

(22) Anmeldetag: **27.05.92**

(30) Priorität: **03.06.91 DE 4118199**
**18.03.92 DE 4208703**

(43) Veröffentlichungstag der Anmeldung:
**09.12.92 Patentblatt 92/50**

(84) Benannte Vertragsstaaten:
**AT CH DE FR GB IT LI**

(71) Anmelder: **LETRON GmbH ELECTRONIC**
**Georg-Strasse 8**
**O-6862 Lehesten/Thür(DE)**

(72) Erfinder: **Walther, Karl-Heinz, Dr.**
**Karl-Marx-Strasse 5**
**O-6860 Wurzbach(DE)**

(74) Vertreter: **Hieke, Kurt**
**Stadlerstrasse 3**
**W-8013 Haar bei München(DE)**

(54) **Verfahren und Einrichtung zum Erzeugen von elektrischen Signalen, die die Position eines Körpers bezüglich einer Bezugsfläche kennzeichnen, insbesondere zur Bildpunkt- oder Cursorsteuerung auf einem Bildschirm.**

(57) Es werden ein Verfahren und eine Einrichtung zum Erzeugen von elektrischen Signalen, die die Position eines Körpers bezüglich einer Bezugsfläche kennzeichnen, vorgeschlagen. Das Verfahren und die Einrichtung eignen sich insbesondere zur Bildpunkt- oder Cursorsteuerung auf einem Bildschirm. Bisher wurden derartige elektrische Signale mittels sogenannter Digitalisierungstabletts erzeugt, die aufwendig sind und eine Kabelverbindung zwischen dem schreibstiftartigen Körper und dem Computer erfordern. Demgegenüber werden erfindungsgemäß die elektrischen Signale drahtlos mittels eines elektromagnetischen Wechselfeldes erzeugt, das am Ort des Körpers SE ausgesendet und von mindestens zwei im gegenseitigen Abstand neben der Bezugsfläche ortsfest angeordneten Positions-Empfangsspulen E1, E2 empfangen wird. Die Position des Körpers SE wird aus den in den Empfangsspulen E1, E2 induzierten Spannungen errechnet.

Fig. 1

Die Erfindung bezieht sich auf ein Verfahren gemäß dem Oberbegriff des Patentanspruchs 1 und auf eine Einrichtung zum Durchführen dieses Verfahrens.

Verfahren gemäß dem Oberbegriff des Patentanspruchs 1 sind bekannt.

Die bekannten Verfahren dienen zur Erstellung von Graphiken und Konstruktionszeichnungen mit Darstellung auf dem Bildschirm einer Datenverarbeitungseinrichtung und arbeiten mit einem sogenannten graphischen oder Digitalisierungstablett, mit dessen Hilfe elektrische Signale erzeugbar und in die Datenverarbeitungseinrichtung eingebbar sind, die die augenblickliche Position einer auf der Tablettfläche verschiebbaren Induktionsspule sehr genau wiedergeben. Das graphische Tablett besteht aus einer Meßplatte mit einem komplizierten Leitermuster zum Messen der x- und y-Koordinaten des Meßpunktes. Durch diese Leiter werden elektrische Impulswellen gesendet, die in der von Hand auf der Tablettfläche bewegbaren Induktionsspule eine Spannung induzieren, deren Phasenlage vom Ort der Spule abhängt. Die Spule ist über ein Kabel mit einer Auswerteschaltung verbunden, die in Verbindung mit einem speziellen Programm aus der in der Spule induzierten Spannung rechnerisch die augenblicklichen Koordinaten der Induktionsspule ermittelt. Das graphische Tablett ist sehr kostspielig und hat einen großen Platzbedarf. Ferner ist eine Kabelverbindung zwischen Induktionsspule, Tablett und Computer nötig, die insbesondere die Handhabung der Induktionsspule störend beeinträchtigt.

Gegenüber der sogenannten "Maus", die zur Cursorsteuerung bei elektronischen Datenverarbeitungseinrichtungen mit Bildschirm eingesetzt wird, hat das graphische Tablett den Vorteil einer wesentlich größeren Genauigkeit bei der Signalbildung und positionsgerechten Steuerung des Bildpunktes oder Cursors. Außerdem besteht bei der Maus anders als beim graphischen Tablett keine eindeutige Beziehung zwischen dem Ort der Maus auf der zu ihrem Betrieb erforderlichen rutschfesten Unterlage und der Position des Bildpunktes oder Cursors auf dem Bildschirm. Aus diesem Grunde eignet sich die Maus z.B. nicht zum genauen Zeichnen von Linien.

Der Erfindung liegt die Aufgabe zugrunde, ein Verfahren gemäß dem Oberbegriff des Patentanspruchs 1 zu schaffen, das mit einem wesentlich geringeren apparativen Aufwand und damit wesentlich kostengünstiger durchführbar ist als die bekannten Verfahren mit den graphischen Tabletts, sich aber dennoch durch eine mit den letzteren vergleichbare Genauigkeit und eindeutige Beziehung zwischen dem Positionssignal und der Lage des Bezugspunktes des Körpers bezüglich der Bezugsfläche auszeichnet.

Die vorstehende Aufgabe wird durch die Merkmale des Patentanspruchs 1 gelöst.

Bei dem erfindungsgemäßen Verfahren werden durch das von der Positions-Sendespule ausgesendete elektromagnetische Positions-Wechselfeld in den mit diesem verketteten ortsfesten Positions-Empfangsspulen Spannungen induziert, deren jeweilige Größe dem augenblicklichen Abstand r des Zentrums der Positions-Sendespule vom Zentrum der betreffenden Positions-Empfangsspule nach einem bekannten physikalischen Gesetz exakt entspricht. Aus der Größe dieser Spannungen kann bei bekanntem gegenseitigem Abstand der Positions-Empfangsspulen die Lage des Zentrums der Positions-Sendespule bezüglich der Positions-Empfangsspulen und damit bezüglich der Bezugsfläche mit hoher Genauigkeit errechnet werden, da die Positions-Empfangspulen an den Ecken eines Vielecks liegen, dessen Seitenlängen bekannt bzw. aus der Größe der bei konstanter Sendeleistung in ihnen induzierten Spannungen ableitbar sind. Dadurch, daß der Bewegungsbereich für den Körper in der im Patentanspruch 1 angegebenen Weise festgelegt wird, sind die einzelnen in den Positions-Empfansspulen induzierten Spannungen auch eindeutig nur einem einzigen Punkt auf der Bezugsfläche zugeordnet. Das erfindungsgemäße Verfahren ermöglicht ebenso wie die Tabletts eine exakte Steuerung des Bildpunktes oder Cursors mittels eines entlang einer Bezugsfläche bewegbaren Körpers.

Die Patentansprüche 2 bis 15 betreffen bevorzugte Ausgestaltungen des Verfahrens gemäß Patentanspruch 1.

Der Patentansprüch 16 hat eine Einrichtung zum Durchführen des erfindungsgemäßen Verfahrens zum Gegenstand.

Die Patentansprüche 17 bis 28 betreffen bevorzugte Ausführungsformen der Einrichtung gemäß Patentanspruch 16.

Die Erfindung wird nachstehend anhand der Zeichnung an einem Ausführungsbeipiel noch näher erläutert.

In der Zeichnung zeigt:

Fig.1    in einer Prinzipdarstellung die Teile einer Einrichtung zum Durchführen des erfindungsgemäßen Verfahrens in betriebsbereiter Anordnung, in Draufsicht,

Fig.2    eine einen Teil der Einrichtung gemäß Fig.1 bildende, frei bewegbare Sendeeinheit mit griffelförmigem Gehäuse und Positions-Sendespule zum Aussenden eines elektromagetischen Positions-Wechselfeldes, im Längsschnitt,

Fig.3    das Blockschaltbild einer in das griffelförmige Gehäuse der Sendeeinheit gemäß Fig. 2 eingebauten ersten elektronischen Schaltungsanordnung zum Speisen der Positions-Sendespule mit Wechselstrom, und

Fig.4    das Blockschaltbild einer zweiten elektronischen Schaltungsanordnung, die zu einer ortsfesten, einen weiteren Teil der Einrichtung gemäß Fig. 1 bildenden, mit Positions-Empfangsspulen ausgerüsteten Empfangseinheit zum Empfangen des von der Sendeeinheit ausgesendeten Positions-Wechselfeldes gehört.

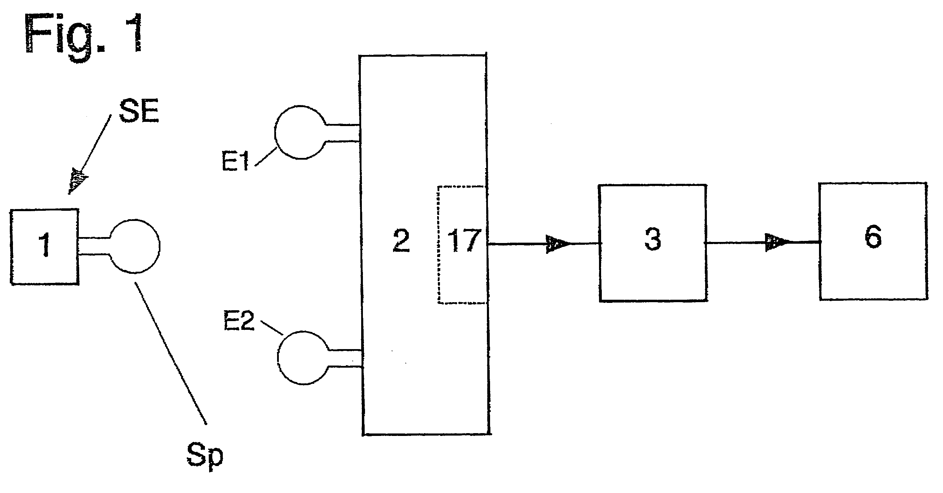

Die in Fig. 1 schematisch dargestellte Einrichtung weist eine als Körper frei bewegbare Sendeeinheit SE mit einer Positions-Sendespule $S_P$ zum Aussenden eines Positions-Wechselfeldes auf, die von einer weiter unten noch näher erläuterten ersten Schaltungsanordnung 1 mit Oszillator und Energiequelle mit Wechselstrom belieferbar ist.

Zu der Einrichtung gemäß Fig. 1 gehört des weiteren eine Empfangseinrichtung EE mit zwei ortsfest aufgestellten, in einem festen gegenseitigen Abstand angeordneten Positions-Empfangsspulen E1, E2 zum Empfangen des Positions-Wechselfeldes, die gesondert z.B. am Gehäuse eines Rechners oder Monitors, unter den Füßen einer Tastatur od. dgl. montiert sein können, vorzugsweise aber auf einem gemeinsamen eigenen Träger befestigt sind. Die Positions-Empfangsspulen E1 und E2 speisen jeweils die in ihnen vom elektromagnetischen Positions-Wechselfeld der Positions-Sendespule induzierte Wechselspannung in eine weiter unten noch näher erläutere zweite Schaltungsanordnung 2 ein, die aus der jeweiligen induzierten Spannung ein zur Steuerung einer mit einem Bildschirm 6 zusammenarbeitenden elektronischen Datenverarbeitungseinrichtung 3, z.B. eines Personal Computers, geeignetes, für den Abstand zwischen Positions-Sendespule $S_P$ und jeweiliger Positions-Empfangsspule E1 bzw. E2 charakteristisches elektrisches Positions-Signal bildet. Aus den von der zweiten Schaltungsanordnung 2 gelieferten Positions-Signalen und dem mit zu berücksichtigenden bekannten festen Abstand zwischen den Positions-Empfangsspulen E1 und E2 errechnet ein in die zweite Schaltungsanordnung 2 integrierter Rechner 17 und/oder die Datenverarbeitungseinrichtung 3 programmgesteuert die Position des Zentrums der Positions-Sendespule $S_P$ bezüglich der Zentren der Positions-Empfangsspulen E1 und E2 und damit die Position des durch die Achse der Positions-Sendespule $S_P$ definierten Bezugspunktes der Sendeeinheit SE in einem von vornherein vorgegebenen, mit dem Bildschirm 6 der Datenverarbeitungseinrichtung 3 korrespondierenden Bewegungsbereich B entlang der zur Zeichenebene der Fig. 1 parallelen Bezugsfläche. Der Bewegungsbereich B und der Bildschirm 6 sind so auf einander abgestimmt, daß der Bewegungsbereich B auf dem Bildschirm voll abgebildet wird. Wenn die Position, die das Zentrum der Positions-Sendespule $S_P$ in dem Bewegungsbereich B bezüglich der Bezugsfläche einnimmt, auf dem Bildschirm 6 durch einen Bildpunkt oder einen Cursor dargestellt wird, kann dieser auf dem Bildschirm dadurch verschoben werden, daß die Sendeeinheit SE innerhalb des Bewegungsbereichs B entsprechend verlagert wird. Auf diese Weise kann durch gezieltes Bewegen der Sendeeinheit SE, auf dem Bildschirm gezeichnet oder geschrieben oder ein Cursor in eine gewünschte Position gebracht werden. Die hierfür benötigte Software ist bekannt und braucht daher nicht näher erläutert zu werden.

Die zweite Schaltungsanordnung 2 erzeugt aus der von der jeweiligen Positions-Empfangsspule E1, E2 in sie eingespeisten Spannung zunächst für jede Positions-Empfangsspule E1 bzw. E2 ein zu dem Abstand zwischen Positions-Sendespule $S_P$ und Positions-Empfangsspule im wesentlichen linear proportionales Analogsignal, das digitalisiert und zur Weiterverarbeitung in eine elektronische Rechneneinrichtung eingegeben wird. Beim Ausführungsbeispiel wird es zunächst in einen Rechner 17, z.B. einen Mikroprozessor, eingespeist, der in die zweite Schaltungsanordnung 2 integriert ist. In Verbindung mit der Empfangseinrichtung EE kann für den Rechner 17 ein Programm vorgesehen werden, das es ermöglicht, die nach dem erfindungsgemäßen Verfahren arbeitende Einrichtung gemäß Fig. 1 anstelle einer Maus oder anstelle eines graphischen Tabletts bei mit solchen Eingabeeinrichtungen betreibbaren elektronischen Datenverarbeitungseinrichtungen 3 einzusetzen.

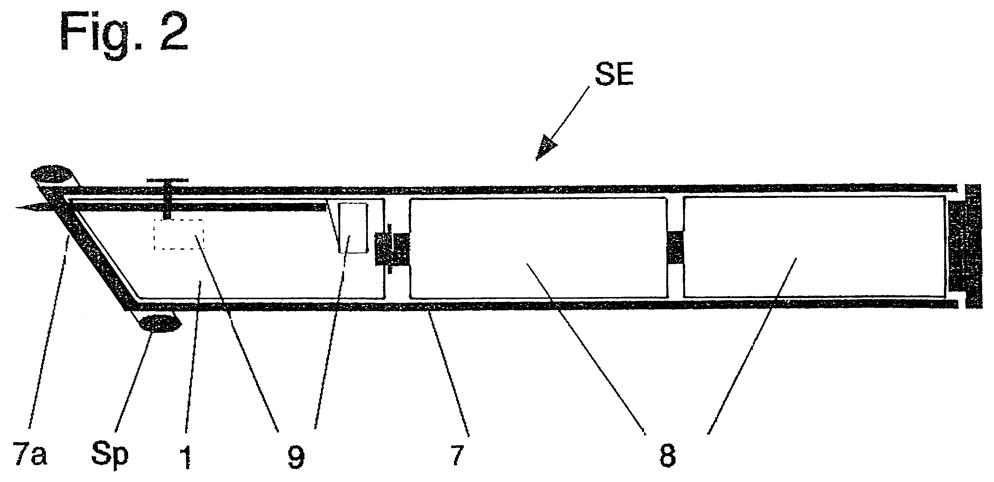

Die Fig. 2 zeigt eine bevorzugte körperliche Ausführungsform der Sendeeinheit SE. Die Sendeeinheit SE weist bei dieser Ausführung ein griffelartiges Gehäuse 7 auf, das nach Art eines Schreibstiftes in der Hand gehalten und entlang der Bezugsfläche bzw. des Bewegungsbereichs B bewegt werden kann. Die Bezugsfläche braucht im Bewegungsbereich B keine besonderen körperlichen Eigenschaften zu haben, und das schreibende Ende 7a des Griffels muß mit ihr beim Darüberbewegen auch keinen Kontakt haben. Der Griffel kann einen runden oder eckigen Umriß haben. Sein schreibendes Ende 7a ist, wie dargestellt, von der Positions-Sendespule $S_P$ umgeben oder umschließt die z.B. auf einer Printplatte im Gehäuse befestigte Positions-Sendespule, wobei die Achse dieser Spule den stirnseitig am Griffelende 7a befindlichen Bezugspunkt des Griffels definiert. Das schreibende, in Fig. 2 unten befindliche Ende 7a des Griffels ist so beschaffen, daß die Positions-Sendespule $S_P$ mit ihrer Stirnfläche parallel zur vorzugsweise ebenen Bezugsfläche liegt, wenn der Griffel wie ein Bleistift beim Schreiben mit einer gewissen Schräglage bezüglich der Bezugsfläche in der Hand gehalten wird.

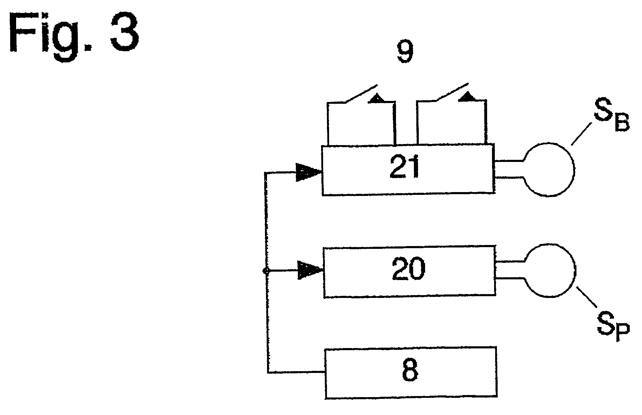

In das Griffelgehäuse 7 ist die erste Schaltungsanordnung 1 mit einem nicht näher dargestellten Oszillator zum Speisen der Positions-Sendespule $S_P$ mit Wechselstrom zusammen mit einer Batterie 8 als Energiequelle zu ihrer Stromversorgung eingebaut. Das Blockschaltbild der ersten Schaltungsanordnung 1 zeigt Fig. 3.

Gemäß Fig. 3 bildet die Positions-Sendespule $S_P$ zum Aussenden des Positions-Wechselfeldes die Induktivität des frequenzbestimmenden Schwingkreises einer in bekannter Weise aufgebauten ersten Oszillatorschaltung 20, die für den Betrieb der Positions-Sendespule $S_P$ auf eine Frequenz im Frequenzbereich von 200 Hz bis 200 kHz abgestimmt ist. Die Frequenz wird vorzugsweise im Bereich von 5 kHz bis 25 kHz gewählt, damit die Sendefrequenz für das Positionssignal unterhalb der Zeilenablenkfrequenz der Bildröhre 6 der Datenverarbeitungseinrichtung 3 liegt.

Die Schaltungsanordnung gemäß Fig. 3 weist ferner eine weitere Oszillatorschaltung 21 zum Speisen einer weiteren, in Fig. 1 nicht dargestellten Sendespule $S_B$ auf, die an oder in dem Gehäuse der Sendeeinheit befestigt ist und über die ein gesondertes Befehls-Wechselfeld ausgesendet werden kann, dessen Frequenz von der Frequenz des Positions Wechselfeldes verschieden ist. Die Oszillatorschaltung 21 bzw. die Speisung dieser weiteren, nachfolgend als Befehls-Sendespule bezeichneten Sendespule $S_B$ ist mittels von außerhalb des Gehäuses der Sendeeinheit SE, z.B. des griffelartigen Gehäuses 7 bei der Sendeeinheit SE gemäß Fig. 2, zugänglicher Kommando-Schalter 9 derart steuerbar, daß das Befehls-Wechselfeld für jeden Kommandoschalter mit einer vorbestimmten Frequenz ausgesendet wird, die sich von den Frequenzen, die den ggf. mehreren anderen Kommandoschaltern 9 zugeordnet sind, unterscheidet, so daß mit jedem Kommandoschalter 9 und einer zugehörigen Elektronik in der Oszillatorschaltung 21 über die Befehls-Sendespule $S_B$ ein durch eine eigene Frequenz unterscheidbar gekennzeichnetes Befehls-Signal von der Sendeeinheit SE her ausgesendet werden kann, um unterschiedliche Befehle zur Initiierung unterschiedlicher Operationen an den Rechner 17 und/oder den Computer 3 zu übermitteln.

Anstelle der vorstehend geschilderten Aussendung eines gesonderten Befehls-Wechselfeldes vorbestimmter Frequenz bzw. Frequenzen könnte auch das von der Oszillatorschaltung 20 erzeugte Positions-Wechselfeld durch Beeinflussung dieser Oszillatorschaltung mittels eines oder mehrerer Kommando-Schalter für jeden von diesen in charakteristischer Weise verändert, z.B. sprunghaft voll oder teilweise unterdrückt oder anderweitig moduliert werden, um auf diese Weise von der Sendeeinheit SE her Befehle an den Rechner 17 und/oder den Computer 3 zu übertragen.

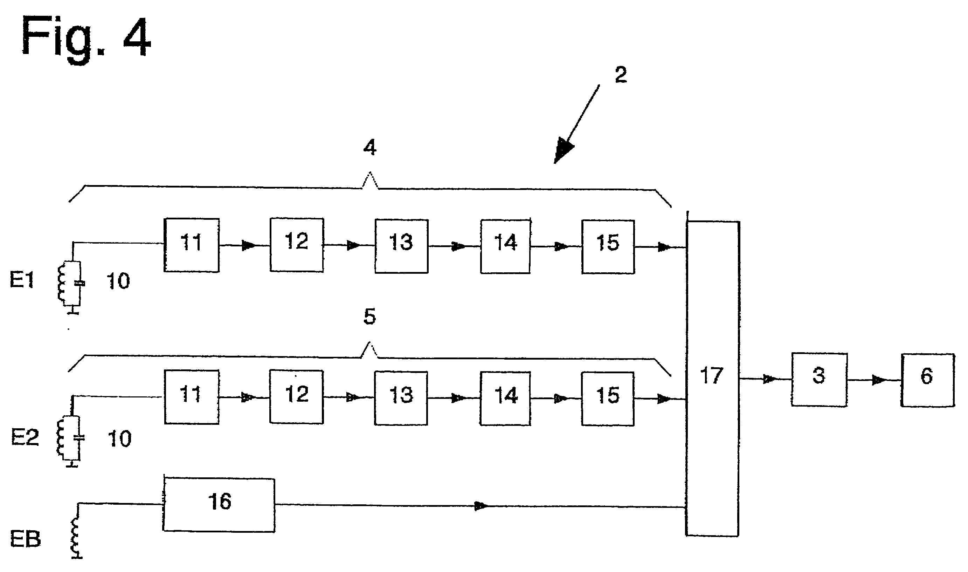

Die Fig. 4 zeigt das Blockschaltbild einer zum Zusammenarbeiten mit der Sendeeinheit SE gemäß Fig. 2 und 3 geeigneten Ausführungsform der zu der Empfangseinheit EE gehörenden zweiten Schaltunganordnung 2 mit je einem Kanal 4 bzw. 5 für jede Positions-Empfangsspule E1 bzw. E2.

Das Positions-Wechselfeld erzeugt in den mit ihm verketteten Positions-Empfangspulen E1, E2 jeweils eine Spannung, deren Größe eine Funktion des Abstandes r zwischen den Spulenachsen von Positions-Sendespule $S_P$ und Positions-Empfangsspule E1, E2 ist. Für diese Spannung gilt allgemein:

$$U = \frac{K}{r^3} \quad .$$

Diese Spannung wird von den Empfansspulen E1, E2 in einen Empfangskreis 10 zur Vorselektion eingespeist. Dem Empfangskreis 10 ist in jedem Kanal 4, 5 ein Impedanzwandler 11 nachgeschaltet. Aus dem Impedanzwandler 11 gelangt das von den Positions-Empfangsspulen E1, E2 kommende Signal in einen nichtlinearen, z.B. logarithmischen, Verstärker 12 zur Komprimierung des sich über drei Dekaden erstreckenden Eingangsspannungsbereiches auf eine Dekade. Die Nichtlinearität des Verstärkers 12 wird dabei möglichst so eingerichtet, daß zwischen der Entfernung Sendespule-Empfangsspule und der Ausgangsspannung des Verstärkers 12 ein linearer Zusammenhang besteht.

Das Ausgangssignal des jeweiligen Verstärkers 12 wird in einen selektiven Filter 13 zur Unterdrückung von Störsignalen eingespeist und hinter dem Filter 13 mittels eines Gleichrichters 14 gleichgerichtet, der so beschaffen ist, daß zwischen Gleich- und Wechselspannung ein möglichst linearer Zusammenhang besteht. Die zu der Entfernung zwischen Positions-Sendespule $S_P$ und Positions-Empfangsspule E1 bzw. E2 im wesentlichen linear proportionale Gleichspannung am Ausgang des Gleichrichters 14 wird für jeden Kanal 4 bzw. 5 mittels eines A/D-Wandlers 15 digitalisiert, der eine Auflösung von mindestens 10 bit hat, um jeden Bildschirmpunkt im Grafikmodus erreichen zu können (VGA: 640 x 480 Pixel), und eine kurze Umsetzzeit von ca. 10 bis 100 $\mu$s aufweist.

Das digitalisierte Positionssignal wird schließlich von jedem Kanal 4 bzw. 5 her in einen Rechner 17, z.B. einen Mikroprozessor, eingegeben, der programmgesteuert aus den Positions-Ausgangssignalen der beiden Kanäle 4, 5 für die Bildpunkt- oder Cursorpositionierung beim Monitor 6 geeignete Signale bildet und auch die mit einer üblichen Microsoft-Maus kompatiblen Schnittstellensequenzen zu simulieren vermag.

Die zweite Schaltungsanordnung 2 weist des weiteren eine Empfangsschaltung 16 auf, die von einer dem Empfang des Befehls-Wechselfeldes der Befehls-Sendespule $S_B$ dienenden Befehls-Empfangsspule $E_B$ gespeist wird. Die Empfangsschaltung 16 wertet die verschiedenfrequenten und/oder verschieden modulierten Kommandoschalterbefehle der Sendeeinheit SE aus und liefert entsprechende Befehls-Signale an den Rechner 17 und/oder den Computer 3, die diese ggf. programmgesteuert weiterverarbeiten und auswerten. Der Rechner 17 und der Computer 3 bilden also aus den von dem Empfangsteil EE her eingespeisten Positions-Signalen und Befehlen programmgesteuert Ausgangssignale zur Steuerung des Bildpunktes oder eines Cursors auf dem Bildschirm oder Display einer mit dem Rechner 17 über ein serielles Schnittstellenkabel verbundenen, gebräuchlichen elektronischen Datenverarbeitungseinrichtung 3.

Wie in Fig. 2 dargestellt, befindet sich einer der Kommandoschalter 9 zur Aussendung eines eine vorbestimmte Frequenz aufweisenden Befehls-Wechselfeldes stirnseitig an dem schreibenden Ende 7a des griffelartigen Gehäuses 7 der Sendeeinheit SE. Er wird beim Aufsetzen des Gehäuses 7 auf eine zur Bezugsfläche parallele Unterlage zur Aussendung eines Befehls betätigt, der die Operation "Zeichnen auf dem Bildschirm" oder "Steuern des Cursors" initiiert. Die Unterscheidung zwischen diesen beiden Operationen besorgt ein weiterer, mittels eines anderen Kommandoschalters 9 ausgegebener Befehl.

Mit dem stirnseitig am schreibenden Ende angeordneten Kommandoschalter 9 kann eine nicht dargestellte Schreibmine, z.B. eine Kugelschreibermine, gekoppelt werden, so daß gleichzeitig auf dem Bildschirm und auf einem Papier, das im Bewegungsbereich B auf einer Unterlage liegt, geschrieben werden kann,

Zur Verbesserung der Linienschärfe auf dem Bildschirm wird vorzugsweise von einigen zeitlich aufeinanderfolgenden Meßwerten entweder mit bekannten Mitteln in jedem der beiden Empfangskanäle 4, 5 oder aber programmgesteuert im Rechner 17 oder im Computer 3 ein Mittelwert gebildet.

Zur Verringerung der Abmessungen der Spulen $S_P$, $S_B$, E1, E2 und $E_B$ werden vorzugsweise Ferritspulen verwendet.

Das erfindungsgemäße Verfahren zum Erzeugen von für die Position eines Bezugspunktes auf oder bezüglich einer Bezugsebene kennzeichnenden Signalen wurde vorstehend am Beispiel der Steuerung eines Bildpunktes oder Cursors auf dem Bildschirm einer Datenverarbeitungseinrichtung erläutert. Diese Anwendung des Verfahrens und der Einrichtung ist zwar von besonderer Bedeutung, doch sind auch viele anderweitige Anwendungen möglich. Generell können das erfindungsgemäße Verfahren und die erfindungsgemäße Einrichtung in weiten Grenzen überall dort eingesetzt werden, wo es darauf ankommt, zu bestimmen, an welcher Stelle auf einer Bezugsfläche sich irgend ein zu beobachtender Körper gerade befindet.

Prinzipiell eignen sich das erfindungsgemäße Verfahren und die erfindungsgemäße Einrichtung auch zur Bestimmung der räumlichen Position eines sich in einem Bezugsraum bewegenden Körpers. In diesem Falle werden mindestens drei Positions-Empfangsspulen außerhalb des Bezugsraumes ortsfest so angeordnet, daß sie nicht alle drei auf einer gemeinsamen Geraden liegen. Auch in diesem Falle hängt die Größe der in den Empfangsspulen induzierten Spannungen von der augenblicklichen geometrischen Konstellation der Sendespulen für das Positions-Wechselfeld bezüglich der Empfangsspulen, und zwar diesmal bei Einbeziehung der mehr als zwei Empfangsspulen in die Auswertung, von der geometrischen räumlichen Konstellation, ab.

## Patentansprüche

1. Verfahren zum Erzeugen von elektrischen Signalen, die die Position kennzeichnen, die ein Bezugspunkt eines entlang einer Bezugsfläche bewegbaren Körpers augenblicklich bezüglich der Bezugsfläche einnimmt, insbesondere zum Erzeugen von elektrischen Signalen, die die Position kennzeichnen, die ein Bezugspunkt am Ende eines nach Art eines Schreibstiftes manuell entlang einer Schreibfläche bewegbaren griffelförmigen Körpers bezüglich der Schreibfläche einnimmt, und mit denen insbesondere der Bildpunkt oder ein Cursor auf einem mit der Bezugsfläche korrespondierenden Bildschirm oder Display einer elektronischen Datenverarbeitungseinrichtung entsprechend der Position dieses Bezugspunktes bezüglich der Bezugsfläche steuerbar ist, **dadurch gekennzeichnet, daß**

   a) mittels einer Positions-Sendespule ($S_P$), die an dem Körper (SE) mindestens in der Nähe von dessen Bezugspunkt befestigt ist und deren Längsachse beim bestimmungsgemäßen Bewegen des Körpers (SE) unter einem im wesentlichen gleichbleibenden Winkel quer zur Bezugsflache gehalten wird, ein eine vorbestimmte Frequenz aufweisendes elektromagnetisches Positions-Wechselfeld mit im wesentlichen konstanter Sendeleistung ausgesendet wird,

   b) das Positions-Wechselfeld von mindestens zwei Positions-Empfangsspulen (E1,E2) empfangen wird, deren Achsen einen bekannten gegenseitigen Abstand haben und die auf bekannter Höhe bezüglich der Bezugsfläche angeordnet und mit dem Positions-Wechselfeld verkettet sind, und

c) auf der Bezugsfläche ein hinsichtlich seiner Erstreckung bezüglich der Orte der Positions-Empfangsspulen (E1,E2) definierter Bewegungsbereich (B) für den Körper (SE) vorgesehen wird, der sich im Abstand von den Positions-Empfangsspulen (E1,E2) auf der gleichen Seite von diesen befindet.

so daß die von dem Positions-Wechselfeld in den Positions-Empfangsspulen (E1,E2) induzierten Spannungen als primäre elektrische Positionssignale ausgebbar sind, deren Größe in Verbindung mit dem bekannten gegenseitigen Abstand der Achsen der Positions-Empfangsspulen (E1,E2) für die augenblickliche Position des Bezugspunktes des Körpers (SE) bezüglich des Bewegungsbereichs (B) kennzeichnend ist.

2. Verfahren nach Anspruch 1, **dadurch gekennzeichnet**, daß die Positions-Empfangsspulen (E1,E2) auf im wesentlichen gleicher Höhe bezüglich der Bezugsfläche angeordnet sind.

3. Verfahren nach Anspruch 1 oder 2, **dadurch gekennzeichnet**, daß die Bezugsfläche eben ist.

4. Verfahren nach einem der vorhergehenden Ansprüche, **dadurch gekennzeichnet**, daß die Positions-Empfangsspulen (E1,E2) so angeordnet werden, daß ihre Längsachsen zueinander im wesentlichen parallel sind.

5. Verfahren nach Anspruch 4, **dadurch gekennzeichnet**, daß die Positions-Empfangsspulen (E1,E2) bezüglich der Bezugsfläche so ausgerichtet werden, daß sich ihre Längsachsen im wesentlichen senkrecht zu dieser erstrecken.

6. Verfahren nach Anspruch 3 und Anspruch 4 oder 5, **dadurch gekennzeichnet**, daß die Positions-Sendespule (S_P) so an dem Körper (SE) befestigt wird, daß ihre Längsachse in der Gebrauchsstellung des Körpers (SE) zu den Längsachsen der Positions-Empfangsspulen (E1,E2) im wesentlichen parallel ist.

7. Verfahren nach einem der vorhergehenden Ansprüche, **dadurch gekennzeichnet**, daß die Frequenz des von der Positions-Sendespule (S_P) ausgesendeten Positions-Wechselfeldes im Frequenzbereich von 200 Hz bis 200 kHz liegt.

8. Verfahren nach Anspruch 6, **dadurch gekennzeichnet**, daß für das Positions-Wechselfeld eine Frequenz im Bereich von 5 kHz bis 25 kHz gewählt wird.

9. Verfahren nach einen der vorhergehenden Ansprüche, **dadurch gekennzeichnet**, daß aus den primären Positionssignalen sekundäre elektrische Positionssignale gebildet werden, die zu dem jeweiligen Abstand zwischen Positions-Sendespule (S_P) und Positions-Empfangsspule (E1 bzw. E2) im wesentlichen linear proportional sind.

10. Verfahren nach Anspruch 9, **dadurch gekennzeichnet**, daß die sekundären Positionssignale in einer Analogschaltung (10-14) gebildet werden.

11. Verfahren nach einem der vorhergehenden Ansprüche, **dadurch gekennzeichnet**, daß die Positionssignale für die Eingabe in die elektronische Datenverarbeitungseinrichtung digitalisiert (15) werden.

12. Verfahren nach einem der vorhergehenden Ansprüche, **dadurch gekennzeichnet**, daß aus mehreren, beim manuellen Bewegen des Körpers (SE) zeitlich aufeinanderfolgenden Positionssignalen für jede Positions-Empfangsspule (E1,E2) ein Mittelwert gebildet wird.

13. Verfahren nach Anspruch 12, **dadurch gekennzeichnet**, daß die Mittelwertbildung softwaremäßig nach Eingabe der Positionssignale in einen Rechner (3,17) durchgeführt wird.

14. Verfahren nach einem der vorhergehenden Ansprüche zur Steuerung des Bildpunktes oder eines Cursors auf dem Bildschirm oder Display einer Datenverarbeitungseinrichtung, **dadurch gekennzeichnet**, daß die Steuerung durch mindestens einen Befehl ausgelöst wird, der vom Körper (SE) her durch Modulation des Signal-Wechselfeldes an die Datenverarbeitungseinrichtung übertragbar ist.

15. Verfahren nach einem der Ansprüche 1 bis 13 zur Steuerung des Bildpunktes oder eines Cursors auf dem Bildschirm oder Display einer Datenverarbeitungseinrichtung, **dadurch gekennzeichnet**, daß die Steuerung durch mindestens einen Befehl ausgelöst wird, der vom Körper (SE) her mittels einer eigenen Befehls-Sendespule (S_B) durch Aussenden eines gesonderten Befehls-Wechselfeldes mit von der Frequenz des Positions-Wechselfeldes verschiedener Frequenz an die Datenverarbeitungseinrichtung übertragbar ist.

**16.** Einrichtung zum Durchführen des Verfahrens nach einem der Ansprüche 1 bis 15, **gekennzeichnet durch**

a) eine frei bewegbare Sendeeinheit (SE) mit einer Positions-Sendespule ($S_P$) zum Aussenden eines eine elektromagnetischen Positions-Wechselfeldes vorbestimmter Frequenz, einer eine Oszillatorschaltung (20) aufweisenden ersten Schaltungsanordnung (1) zum Speisen der Positions-Sendespule ($S_P$) mit Wechselstrom vorbestimmter Frequnz und einer Energiequelle (8) zur Energieversorgung der ersten Schaltungsanordnung (1),

b) mindestens zwei ortsfest aufstellbare Positions-Empfangsspulen (E1,E2,) zum Empfangen des von der Sendeeinheit (SE) ausgesendeten Positions-Wechselfeldes,

c) Mittel zum Anordnen der Positions-Empfangsspulen (E1,E2) in einem festen gegenseitigen Abstand, und

d) eine zweite Schaltungsanordnung (2) zum Bilden von zur Steuerung einer elektronischen Datenverarbeitungseinrichtung (3,17) geeigneten, für den Abstand zwischen Positions-Sendespule ($S_P$) und jeweiliger Positions-Empfangsspule (E1 bzw. E2) charakteristischen elektrischen Signalen aus den vom Positions-Wechselfeld in den Positions-Empfangsspulen (E1,E2) induzierten Spannungen.

**17.** Einrichtung nach Anspruch 16, **dadurch gekennzeichnet**, daß die Sendeeinheit (SE) ein griffelförmiges Gehäuse (7) aufweist, an dem die Wicklung der Positions-Sendespule ($S_P$) befestigt ist und in dem die erste Schaltungsanordnung (1) und die Energiequelle (8) untergebracht sind.

**18.** Einrichtung nach Anspruch 17, **dadurch gekennzeichnet**, daß die Wicklung der Positions-Sendespule ($S_P$) bei dem der Bezugsfläche zugewendeten Ende (7a) des Gehäuses (7) angeordnet ist und die Längsachse der Positions-Sendespule ($S_P$) mit der Längsachse des Gehäuses (7) einen spitzen Winkel einschließt.

**19.** Einrichtung nach einem der vorhergehenden Ansprüche 16 bis 18 zum Durchführen des Verfahrens nach Anspruch 14, **dadurch gekennzeichnet**, daß die erste Schaltungsanordnung eine Modulatorschaltung zum Modulieren des der Positions-Sendespule ($S_P$) zugeführten Wechselstromes und mindestens einen von außerhalb des Gehäuses zugänglichen Kommandoschalter zum Aktivieren der Modulatorschaltung aufweist.

**20.** Einrichtung nach Anspruch 19, **dadurch gekennzeichnet**, daß die zweite Schaltungsanordnung eine eingangsseitig mit mindestens einer der Positions-Empfangsspulen (E1,E2) verbundene, ausgangsseitig an die Datenverarbeitungseinrichtung (3,17) angeschlossene Demudulationsschaltung aufweist.

**21.** Einrichtung nach einem der Ansprüche 16 bis 18 zum Durchführen des Verfahrens nach Anspruch 15, **gekennzeichnet durch** eine, zusätzlich zur Positions-Sendespule ($S_P$) an der Sendeeinheit (SE) befestigte Befehls-Sendespule ($S_B$) zum Aussenden eines Befehls-Wechselfeldes, durch mindestens eine weitere, an die Energiequelle (8) angeschlossene Oszillatorschaltung (21) in der ersten Schaltungsanordnung (1) zum Speisen der Befehls-Sendespule ($S_B$) mit Wechselstrom von einer Frequenz, die von der Frequenz des Positions-Wechselfeldes verschieden ist, und durch mindestens einen von außerhalb des Gehäuses (7) zugänglichen, willkürlich betätigbaren Kommandoschalter (9) zum Aktivieren und/oder Modulieren der Stromspeisung der Befehls-Sendespule ($S_B$).

**22.** Einrichtung nach Anspruch 21, **gekennzeichnet durch** mindestens eine zusätzlich zu den Positions-Empfangsspulen (E1,E2) ortsfest aufstellbare Befehls-Empfangsspule ($E_B$) und eine an diese angeschlossene Selektionsschaltung (16) in der zweiten Schaltungsanordnung (2), die auf die Frequenz des Befehls-Wechselfeldes abgestimmt ist und nur ein diese Frequenz aufweisendes, ggf. moduliertes Signal zur Datenverarbeitungseinrichtung (3,17) durchläßt.

**23.** Einrichtung nach einem der Ansprüche 19 bis 22, **dadurch gekennzeichnet**, daß ein Kommandoschalter (9) stirnseitig am bezugsflächennahen Ende (7a) des griffelförmigen Gehäuses (7) angeordnet und durch Aufsetzen des Gehäuses (7) auf eine sich in der Bezugsfläche oder parallel zu dieser erstreckende Unterlage betätigbar ist.

**24.** Einrichtung nach Anspruch 23, **dadurch gekennzeichnet**, daß der aufsetzbare Kommandoschalter (9) mit einer Schreibmine gekoppelt ist.

**25.** Einrichtung nach einem der Ansprüche 16 bis 24, **dadurch gekennzeichnet**, daß die beiden Positions-Empfangsspulen (E1,E2) an einem gemeinsamen Träger befestigt und mit der zweiten Schaltungsanordnung (2) zu einer Empfangseinheit (EE) zusammengefaßt sind.

26. Einrichtung nach einem der Ansprüche 16 bis 25, **dadurch gekennzeichnet**, daß die zweite Schaltungsanordnung (2) von der elektronischen Datenverarbeitungseinrichtung (3) her mit Energie versorgt wird.

27. Einrichtung nach einem der Ansprüche 16 bis 26, **dadurch gekennzeichnet**, daß die zweite Schaltungsanordnung (2) eine Analogschaltung (12) zum Komprimieren und Linearisieren der von den Positions-Empfangsspulen (E1,E2) abgegebenen Signale aufweist.

28. Einrichtung nach einem der Ansprüche 16 bis 27, **dadurch gekennzeichnet**, daß die Sendespulen ($S_P$, $S_B$) und die Empfangsspulen (E1,E2,$E_B$) als Ferritspulen ausgeführt sind.

Fig. 1

Fig. 2

SE

7a  Sp  1  9  7  8

Fig. 3

# Fig. 4

EP 0 517 078 A2